# FASCICULE DE BREVET EUROPEEN

(11) **EP 1 269 833 B1**
(45) Date de publication et mention de la délivrance du brevet: **17.11.2004**
(21) Numéro de dépôt: 02291482.4
(22) Date de dépôt: 13.06.2002
(51) Int. Cl.: A01K 1/01

(54) **Bac à déjection pour animaux domestiques, destiné à l'aménagement urbain**
Haustiertoilette zur Anwendung im Stadtbereich
Pet toilet for use in an urban environment

(30) Priorité: 18.06.2001 FR 0107920
(43) Date de publication de la demande: 02.01.2003
(73) Titulaire: Plas Eco S.A.R.L., 14790 Verson (FR)
(72) Inventeur: Porte, Gérard, 14790 Verson (FR)
(74) Mandataire: Maillet, Alain

(56) Documents cités:
- WO-A-96/24324
- CH-A- 344 194
- CH-A- 662 243
- GB-A- 2 000 955
- US-A- 5 085 174

## Description

La présente invention concerne de manière générale un bac à déjection pour animaux domestiques, destiné à l'aménagement urbain.

De façon connue, un bac à déjection pour animaux domestiques, notamment pour chiens, est un élément de mobilier urbain destiné à être installé fixe dans un lieu public comme un square, un parc ou un jardin. Il s'agit généralement d'un bac de taille importante, son fond ayant une surface généralement comprise entre 2 et 10 m², contenant du sable ou un autre corps granuleux formant litière et comprenant une ouverture par laquelle des animaux domestiques peuvent entrer et sortir.

L'entretien de tels bacs est assez compliqué et coûteux, de sorte qu'ils ne peuvent être vidangés et lavés suffisamment régulièrement pour que les animaux domestiques comme les chiens puissent prendre l'habitude de les utiliser.

On connaît par le document US-A-5 085 174 un dispositif d'entraînement pour chien destiné à l'inciter à se soulager à des endroits précis, constitué d'un panneau (10) formant fond entouré d'une bordure (12) constituée de lattes de bois et sur lequel peuvent être déposées des feuilles de journal; un piquet (16) étant vissé dans une douille (18) placée au centre du panneau (10) et comporte à son extrémité libre une boucle (22) pour attacher, par l'intermédiaire d'une laisse et un collier, un chien.

On connaît également par le document CH-A-662 243 une borne transportable destinée à être installée sur une grille d'égout pour attirer et inciter les animaux domestiques à faire leurs besoins, la bome étant constituée d'une colonne (1) montée sur un piétement (6) permettant sa fixation à la grille d'un égout (18), la colonne étant surmontée d'un anneau de levage (13) destiné à permettre la manutention de la borne.

Un but de la présente invention est de résoudre le problème qui vient d'être évoqué.

A cet effet, il est proposé un bac à déjection pour animaux domestiques destiné à l'aménagement urbain selon la revendication 1.

Ainsi, le bac peut être soulevé du sol et déposé sur un moyen de transport auquel est associé un moyen de levage afin d'être transporté vers un lieu d'entretien où il est vidangé, lavé et rempli d'une litière propre. Le moyen de transport sera avantageusement un camion ou une semi-remorque pourvu d'une plate-forme adaptée à recevoir le bac, et d'un engin de levage.

Ainsi, ledit bac peut être soulevé au moyen d'un seul câble de levage. La vidange du bac peut être réalisée en faisant basculer le bac suspendu au câble de levage du côté d'une ouverture pratiquée sur au moins un côté du bac. Cette ouverture sera avantageusement la même que celle qui permet l'entrée et la sortie des animaux domestiques lorsque le bac est installé dans son lieu d'utilisation.

Selon une autre caractéristique de l'invention, ledit moyen d'accrochage est recouvert par un cache de section correspondant à celle du mat.

Selon une autre caractéristique de l'invention, une ouverture est ménagée au centre d'au moins l'un des bords latéraux du bac pour permettre l'entrée et la sortie d'animaux domestiques.

Selon une autre caractéristique de l'invention, l'ouverture débouche vers le haut du bord latéral et s'arrête à une distance du fond correspondant sensiblement à la hauteur de litière qu'il est prévu de mettre dans le bac.

Ainsi, le moyen d'accrochage est facilement accessible, à distance de la litière contenue dans le bac.

Selon une autre caractéristique de l'invention, la plus grande largeur dudit bac est inférieure ou égale à 2,40 m.

Ainsi, le bac est transportable sans avoir à remplir de formalités administratives particulières.

Selon une autre caractéristique de l'invention, au moins l'un des bords latéraux du bac est surmonté de rebords horizontaux formant assise permettant à une personne de s'asseoir.

Selon une autre caractéristique de l'invention, la matière plastique d'habillage est une matière plastique recyclée résistante aux agents de nettoyage courants tels que de l'eau de javel ®.

Les caractéristiques de l'invention mentionnées ci-dessus, ainsi que d'autres, apparaîtront plus clairement à la lecture de la description suivante d'un exemple de réalisation d'un bac à déjection pour animaux domestiques selon l'invention, ladite description étant faite en relation avec le dessin joint:

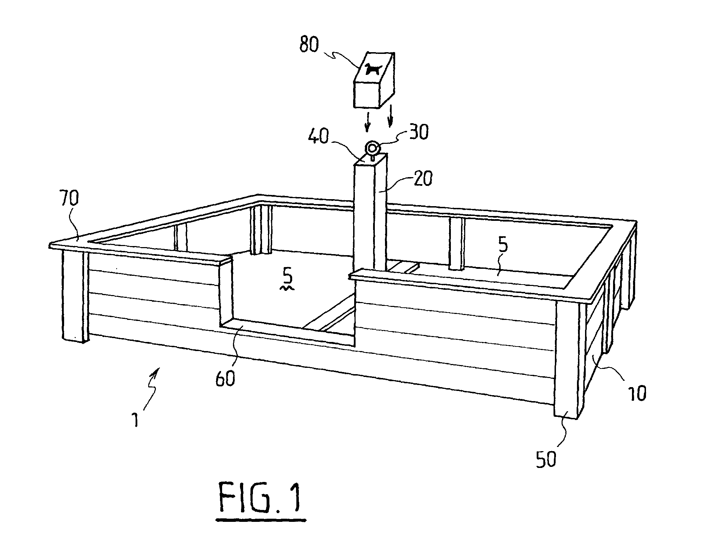

la Fig. 1 unique est une vue en perspective d'un bac à déjection pour animaux domestiques, destiné à l'aménagement urbain, selon l'invention.

En référence à la Fig. 1, un bac à déjection 1 comprend un fond carré 5 entouré de quatre bords latéraux 10 eux-mêmes surmontés de rebords horizontaux 70 s'étendant vers l'extérieur. Quatre pieds 50 disposés aux quatre angles du bac 1 permettent à ce dernier de reposer sur le sol, par exemple sur une dalle aménagée dans un parc, un square ou un jardin public.

Une ouverture 60 est ménagée au centre d'au moins l'un des bords latéraux 10 du bac 1 pour permettre l'entrée et la sortie d'animaux domestiques. Cette ouverture, débouchant vers le haut du bord latéral 10, s'arrête à une distance du fond 5 correspondant sensiblement à la hauteur de litière qu'il est prévu de mettre dans le bac 1.

Selon l'invention, un mat 20 est fixé sur le fond 5 à l'aplomb du centre de gravité du bac 1. Ce mat 20 a une hauteur substantiellement supérieure à la hauteur des bords latéraux 10. A l'extrémité du mat 20, est installé un moyen d'accrochage 30 tel qu'un oeillet d'accrochage 30 monté fixe sur le mat 20 par l'intermédiaire d'une tige 40. Un cache 80, de section correspondant à celle du mat 20, creux, fermé en haut et ouvert en bas, peut être installé de manière amovible sur le mat 20 afin de cacher aux yeux du public l'oeillet d'accrochage 30.

Le bac 1 peut être constitué d'une structure métallique recouverte d'un habillage de planches en matière plastique. Avantageusement, la matière plastique d'habillage est résistante aux agents de nettoyage, et en particulier à l'eau de javel ®. Avantageusement, la matière plastique d'habillage est une matière plastique recyclée.

Avantageusement, les côtés du bac 1 sont de longueur inférieure ou égale à 2,40 m. La surface typique du fond 5 est comprise entre 2 et 8 m².

Avantageusement, au moins l'un des bords latéraux 10 du bac 1 est surmonté de rebords horizontaux 70 formant assise permettant à une personne de s'asseoir.

Le fond 5 est lisse et peut recevoir une litière adaptée. Le bac est par exemple rempli d'une Tonne de litière formant une profondeur de litière d'environ 10 cm.

Lorsque l'on désire entretenir le bac 1, on amène à l'emplacement du bac 1 un camion ou une semi-remorque pourvu d'une plate-forme adaptée à recevoir le bac 1 et d'un engin de levage, par exemple une grue à un câble pourvu d'un crochet à son extrémité. Une fois le cache 80 retiré, le crochet de l'engin de levage vient en prise avec l'oeillet d'accrochage 30 et le treuil de l'engin de levage est actionné pour soulever le bac 1. Par pivotement et/ou translation adaptés de l'engin de levage, le bac 1 est ensuite amené sur la plate-forme.

Après transport vers un lieu d'entretien, le bac 1 est vidangé. Pour cela, le crochet de l'engin de levage étant toujours en prise avec l'oeillet 30, il est suspendu au-dessus du lieu de vidange par pivotement et/ou translation adaptés de l'engin de levage. La vidange est réalisée en faisant basculer le bac suspendu au câble de levage du côté de l'ouverture 60. Le bac est ensuite lavé au moyen d'un agent de nettoyage liquide, par exemple de l'eau de javel ®, et rempli d'une litière propre, puis ramené et réinstallé sur son lieu d'utilisation.

## Revendications

1. Bac à déjection (1) pour animaux domestiques, destiné à l'aménagement urbain, comprenant un fond (5) entouré de bords latéraux (10), un mât (20) étant fixé sur le fond (5) à l'aplomb du centre de gravité du bac (1), un moyen d'accrochage (30) étant ménagé sur la partie supérieure du mât (20) pour permettre d'accrocher de manière amovible ledit bac (1) à un moyen de levage, **caractérisé en ce que** le bac (1) est constitué d'une structure métallique recouverte d'un habillage de planches en matière plastique.

2. Bac à déjection selon la revendication 1, **caractérisé en ce que** la matière plastique d'habillage est une matière plastique recyclée résistante aux agents de nettoyage courants tels que de l'eau de javel ®.

3. Bac à déjection selon la revendication 1 ou 2, **caractérisé en ce que** ledit moyen d'accrochage (30) est recouvert par un cache (80) de section correspondant à celle du mât (20).

4. Bac à déjection selon la revendication 1, 2 ou 3, **caractérisé en ce qu'**une ouverture (60) est ménagée au centre d'au moins l'un des bords latéraux (10) du bac (1) pour permettre l'entrée et la sortie d'animaux domestiques.

5. Bac à déjection selon la revendication 4, **caractérisé en ce que** cette ouverture (60) débouche vers le haut du bord latéral (10) et s'arrête à une distance du fond (5) correspondant sensiblement à la hauteur de litière qu'il est prévu de mettre dans le bac (1).

6. Bac à déjection selon l'une quelconque des revendications précédentes, **caractérisé en ce que** la plus grande largeur dudit bac (1) est inférieure ou égale à 2,40 m.

7. Bac à déjection selon l'une quelconque des revendications précédentes, **caractérisé en ce qu'**au moins l'un des bords latéraux (10) du bac (1) est surmonté de rebords horizontaux (70) formant assise permettant à une personne de s'asseoir.

## Claims

1. An excrement trough (1) for domestic animals intended for use in urban areas, comprising of a base (5) surrounded by lateral sides (10), a pole (20) being fixed to the base (5) perpendicular to the centre of gravity of the trough (1), a securing device (30) being fixed to the upper part of the pole (20) to enable removable fixing from the said trough (1), a means of lifting, **characterised in that** the trough (1) is made of a metallic structure covered by a casing of boards made of plastic material.

2. An excrement trough according to claim 1, **characterised in that** the plastic casing material is a recycled plastic material resistant to current cleaning agents such as bleach.

3. An excrement trough according to claims 1 or 2, **characterised in that** the said securing device (30) is covered by a cover (80) of section corresponding to that of the pole (20).

4. An excrement trough according to claims 1, 2 or 3, **characterised in that** an opening (60) is inserted at the centre of at least one of the lateral sides (10) of the trough (1) to permit the entry and exit of domestic animals.

5. An excrement trough according to claim 4, **characterised in that** this opening (60) opens in the direction of the top of the lateral side and stops at a distance from the base (5) corresponding approximately to the height of the litter which is intended to be put into the trough (1).

6. An excrement trough according to any one of the preceding claims, **characterised in that** the greatest width of the said trough (1) is less than or equal to 2.40 m.

7. An excrement trough according to any one of the preceding claims, **characterised in that** at least one of the lateral sides (10) of the trough (1) is topped with horizontal edges (70) forming seating enabling a person to sit down.

## Patentansprüche

1. Haustiertoilette (1), die zur Anwendung im Stadtbereich bestimmt ist, umfassend einen Boden (5), der von Seitenrändern (10) umgeben ist, einen Masten (20), der auf dem Boden (5) senkrecht zum Schwerpunkt der Toilette (1) befestigt ist, ein Befestigungsmittel (30), das auf dem oberen Teil des Masten (20) befestigt ist, um es zu ermöglichen, die Toilette (1) abnehmbar an ein Hebemittel zu befestigen, **dadurch gekennzeichnet, dass** die Toilette (1) von einer Metallstruktur gebildet ist, die mit einer Verkleidung aus Kunststoffbrettern bedeckt ist.

2. Toilette nach Anspruch 1, **dadurch gekennzeichnet, dass** der Verkleidungskunststoff ein rezyklierter Kunststoff ist, der gegen die üblichen Reinigungsmittel, wie beispielsweise Javellauge ®, unempfindlich ist.

3. Toilette nach Anspruch 1 oder 2, **dadurch gekennzeichnet, dass** das Befestigungsmittel (30) von einer Abdeckung (80) mit einem Querschnitt, der jenem des Masten (20) entspricht, bedeckt ist.

4. Toilette nach Anspruch 1, 2 oder 3, **dadurch gekennzeichnet, dass** eine Öffnung (60) in der Mitte von mindestens einem der Seitenränder (10) der Toilette (1) vorgesehen ist, um den Haustieren den Eintritt und den Austritt zu ermöglichen.

5. Toilette nach Anspruch 4, **dadurch gekennzeichnet, dass** diese Öffnung (60) am Seitenrand (10) nach oben mündet und in einem Abstand zum Boden (5) endet, der im Wesentlichen der Höhe des Streus entspricht, das in der Toilette (1) angeordnet werden soll.

6. Toilette nach einem der vorhergehenden Ansprüche, **dadurch gekennzeichnet, dass** die größte Breite der Toilette (1) kleiner oder gleich 2,40 m ist.

7. Toilette nach einem der vorhergehenden Ansprüche, **dadurch gekennzeichnet, dass** über mindestens einem der Seitenränder (10) der Toilette (1) horizontale Leisten (70) befestigt sind, die eine Sitzfläche bilden, die es einer Person ermöglicht, sich zu setzen.
